# EUROPEAN PATENT APPLICATION

(11) **EP 4 678 898 A1**
(43) Date of publication of application: **14.01.2026**
(21) Application number: 25188263.5
(22) Date of filing: 08.07.2025
(51) Int. Cl.: F02C 7/042, F02C 7/057, F02K 1/11, F02K 1/60, F02C 6/20

(54) **TURBOPROP ENGINE WITH CLOSABLE CORE**

(30) Priority: 08.07.2024 US 202418765556
(71) Applicant: PRATT & WHITNEY CANADA CORP., Longueuil, Québec J4G 1A1 (CA)
(72) Inventor: BERTRAND, Pierre, (01BE5) Longueuil, J4G 1A1 (CA); SHENOUDA, Antwan, (01BE5) Longueuil, J4G 1A1 (CA)
(74) Representative: Dehns

(57) **Abstract**

An aircraft engine (10), has: a core having a compressor (13), a combustor (14), and a turbine (15) disposed in serial flow communication, the turbine (15) in driving engagement with a propeller (17); a nacelle (100) extending around the core, the nacelle (100) having a nacelle intake (101) upstream of the core and a nacelle exhaust (120) downstream of the core, the nacelle intake (101) configured for receiving air from an environment outside the nacelle (100), the nacelle intake (101) fluidly connected to the compressor (13) for feeding air thereto, the nacelle exhaust (120) configured to discharge combustion gases from the turbine (15) into the environment outside the nacelle (100); and a blocking member (104) movable between an open position in which the core is fluidly connected to the environment via both the nacelle (100) intake (101) and the nacelle exhaust (120), and a closed position in which the blocking member (104) hinders fluid communication between the core and the environment via one of the nacelle (100) intake (101) and the nacelle exhaust (120).

## Description

### TECHNICAL FIELD

The application relates generally to aircraft engines and, more particularly, to systems and methods to isolate a core of the aircraft engine in some operating conditions to prevent windmilling.

### BACKGROUND

A subset of engines of an aircraft may be powered off during flight in some situations, such as when the aircraft is loitering around a specific location. Existing methods of doing so may be satisfactory, but there is always a need for improvement.

### SUMMARY

According to an aspect of the present invention, there is provided an aircraft engine, comprising: a core having a compressor, a combustor, and a turbine disposed in serial flow communication, the turbine in driving engagement with a propeller; a nacelle extending around the core, the nacelle having a nacelle intake upstream of the core and a nacelle exhaust downstream of the core, the nacelle intake configured for receiving air from an environment outside the nacelle, the nacelle intake fluidly connected to the compressor for feeding air thereto, the nacelle exhaust configured to discharge combustion gases from the turbine into the environment outside the nacelle; and a blocking member movable between an open position in which the core is fluidly connected to the environment via both the nacelle intake and the nacelle exhaust, and a closed position in which the blocking member hinders fluid communication between the core and the environment via one of the nacelle intake and the nacelle exhaust.

The aircraft engine described above may include any of the following features, in any combinations.

Optionally, and in accordance with the above, the nacelle has an intake conduit extending from the nacelle intake towards the compressor, the blocking member is located between the nacelle intake and the compressor, and the blocking member is structured to block airflow from the nacelle intake to the compressor when in the closed position.

Optionally, and in accordance with any of the above, the blocking member is a door pivotably mounted to a wall of the intake conduit, the door extending across the intake conduit in the closed position and being positioned to permit fluid communication between the nacelle intake and the compressor in the open position.

Optionally, and in accordance with any of the above, the intake conduit defines a bypass outlet, the door extending across the bypass outlet in the open position and being offset from the bypass outlet in the closed position.

Optionally, and in accordance with any of the above, the engine includes an inertial particle separator including a deflector pivotably mounted to a second wall of the intake conduit opposite the wall, the door abutting the deflector in the closed position of the blocking member, the deflector and the door conjointly hindering fluid communication between the nacelle intake and the compressor.

Optionally, and in accordance with any of the above, the deflector includes a base section pivotably connected to the second wall and a tip section pivotably mounted to the base section, the tip section movable relative to the base section between a first position in which the tip section extends transversally to the base section and a second position in which the tip section is substantially parallel to the base section, the tip section being in the second position in the closed position of the blocking member, the door abutting the tip section in the closed position.

Optionally, and in accordance with any of the above, the blocking member is a wall of the intake conduit, the wall extending from a base to a tip, the tip located at the nacelle intake, the base pivotably connected to a remainder of the nacelle, the wall movable from the open position to the closed position to close the nacelle intake of the intake conduit.

Optionally, and in accordance with any of the above, the blocking member is a door located at the nacelle exhaust of the nacelle, the door extending across the nacelle exhaust in the closed position, the core fluidly connected to the environment solely via the nacelle intake in the closed position of the door.

According to another aspect of the present invention, there is provided an aircraft comprising a plurality of aircraft engines, the plurality of aircraft engines including one or more of the aircraft engine as described above, the aircraft engine having a controller operatively connected to an actuator, the actuator engaged to the blocking member, the controller having a processing unit and a computer-readable medium having instructions stored thereon executable by the processing unit to: cause the aircraft engine to power off while the aircraft is flying; and power the actuator to move the blocking member from the open position to the closed position.

According to another aspect of the present invention, there is provided an aircraft propulsor, comprising: a heat engine having an air intake and a hot gas exhaust; a nacelle disposed at least in part around the heat engine and defining an intake conduit from an environment outside the nacelle to the air intake of the heat engine and an exhaust conduit from the hot gas exhaust to the environment; and a blocking mechanism operable between a closed position in which the blocking mechanism blocks one of the intake conduit and the exhaust conduit and an open position in which the blocking mechanism unblocks the one of the intake conduit and the exhaust conduit.

The aircraft propulsor described above may include any of the following features, in any combinations.

Optionally, and in accordance with the above, the blocking mechanism includes an actuator and a door that is movable by the actuator between the closed position in which the door blocks the one of the intake conduit and the exhaust conduit and the open position in which the door unblocks the one of the intake conduit and the exhaust conduit.

Optionally, and in accordance with any of the above, the door is dimensioned to block substantially all airflow through the one of the intake conduit and the exhaust conduit when the door is in the closed position and the aircraft propulsor is moving at a cruise airspeed relative to earth.

Optionally, and in accordance with any of the above, the door is pivotable between the open position and the closed position.

Optionally, and in accordance with any of the above, the propulsor includes an inertial particle separator fluidly upstream of the air intake of the heat engine and wherein the blocking mechanism is part of the inertial particle separator.

Optionally, and in accordance with any of the above, the heat engine is one of: a gas turbine engine, a reciprocating engine, and a rotary engine.

Optionally, and in accordance with any of the above, the door defines a wall of the intake conduit when the door is in the open position.

Optionally, and in accordance with any of the above, the door is disposed relative to the nacelle to block the exhaust conduit when the door is in the closed position.

According to another aspect of the present invention, there is provided a method for mitigating effects of windmilling in a turboprop engine having a nacelle enclosing a core including a compressor, a combustor, and a turbine, the nacelle defining an intake fluidly connected to the core, the method comprising: upon the turboprop engine being powered off in flight, preventing an airflow from flowing from the intake and through the core with a blocking member extending across a flow path extending from the intake to an exhaust.

The method described above may include any of the following features, in any combinations.

Optionally, and in accordance with the above, the blocking member is located upstream of the compressor and within an intake conduit defining the intake.

Optionally, and in accordance with any of the above, the blocking member is located at the exhaust.

### DESCRIPTION OF THE DRAWINGS

Reference is now made to the accompanying figures in which:
Fig. 1 is a schematic cross sectional view of an aircraft engine depicted as a turboprop gas turbine engine;
Fig. 2 is a schematic cross sectional view of the aircraft engine of Fig. 1 encased in a nacelle;
Fig. 3 is a schematic cross sectional view of another aircraft engine encased in a nacelle;
Fig. 4 is a schematic cross sectional view of the aircraft engine of Fig. 1 encased in a nacelle in accordance with another embodiment;
Fig. 5 is a schematic cross sectional view of the aircraft engine of Fig. 1 encased in a nacelle in accordance with another embodiment;
Fig. 6 is a schematic cross sectional view of an aircraft engine encased in a nacelle in accordance with yet another embodiment;
Fig. 7 is a schematic cross sectional view of an aircraft engine encased in a nacelle in accordance with another embodiment;
Fig. 8 is a schematic top view of the aircraft engine and nacelle of Fig. 7;
Fig. 9 is a schematic view of an aircraft equipped with four engines;
Fig. 10 is a flowchart illustrating steps of a method of mitigating effects of windmilling in any of the aircraft engines described herein; and
Fig. 11 is a schematic representation of a controller in accordance with one embodiment.

### DETAILED DESCRIPTION

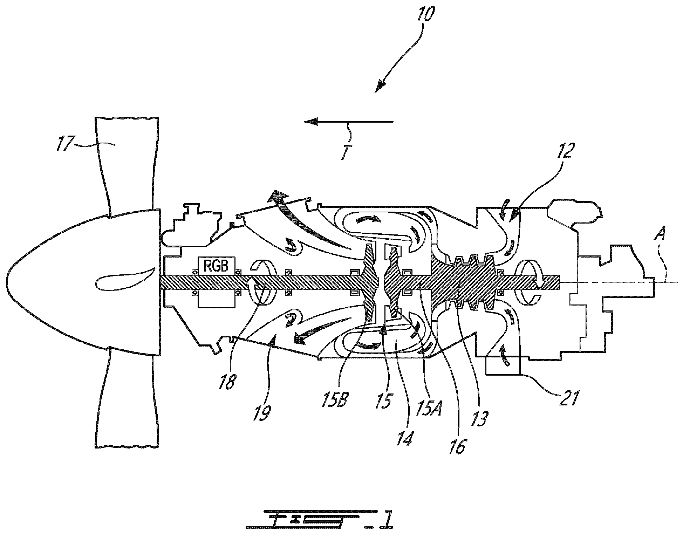

Fig. 1 illustrates an aircraft engine depicted as a gas turbine engine 10 of a type preferably provided for use in subsonic flight, generally comprising in serial flow communication an inlet 12 for receiving air, a compressor 13 for compressing the air received via the inlet 12, a combustor 14 for mixing fuel with the compressed air and for generating an annular stream of combustion gases. A turbine 15 receives the combustion gases from the combustor 14. The compressor 13, the combustor 14, and the turbine 15 are parts of a core of the gas turbine engine 10. The turbine section 15 has a high-pressure turbine 15A drivingly engaged to the compressor 13 via a high-pressure shaft 16. The turbine 15 further has a power or low-pressure turbine 15B downstream of the high-pressure turbine 15A and drivingly engaged to a propeller 17 via a low-pressure shaft 18. The low-pressure shaft 18 may be directly engaged to the propeller 17 or, as shown herein, drivingly engaged to the propeller 17 via a reduction gearbox RGB. The gas turbine engine 10 has an exhaust 19 for expelling the combustion gases. In an alternate embodiment, the compressor section may include a high-pressure compressor drivingly engaged to the high-pressure turbine 15A via the high-pressure shaft 16 and a low-pressure compressor drivingly engaged to the low-pressure turbine 15B via the low-pressure shaft 18. The gas turbine engine 10 of Fig. 1 is a reverse flow engine in that a flow direction through the core is the same as a direction of travel T of the gas turbine engine 10. The principles of the present invention are also applicable to through-flow gas turbine engine in which the flow direction through the core is opposite the direction of travel T. Principles of the present invention apply to any aircraft propulsor including a heat engine (e.g., turboprop, turboshaft, reciprocating engine, rotary engine, etc).

The gas turbine engine 10 may be mounted to an aircraft. The gas turbine engine 10 may be one of a plurality of aircraft engines mounted to the aircraft. For performance reasons, it is sometimes advantageous to shut down at least one of the aircraft engines in flight. For instance a 4-engine aircraft may shut down two engines during flight. Such a manoeuvre may be performed while the aircraft is loitering, that is, flying around a specific location. This may increase performance of the engines that remain powered-on. However, the engine that is shut down in flight will be forced to swallow more air than the core can handle and will be forced to rotate (i.e. windmill). More air than the engine can swallow may cause "spillage drag" that is created by the overflowing of the air around the inlet causing separation. This air may cause the engine core to rotate and this may cause wear on the rotating parts, which will lack proper lubrication. The engine may become very cold and restarting it may be challenging. The current invention proposes to isolate the core of non-powered engines in flight to prevent windmilling and to avoid the need for lubricating the inoperative engines, which may be challenging during long windmilling operation.

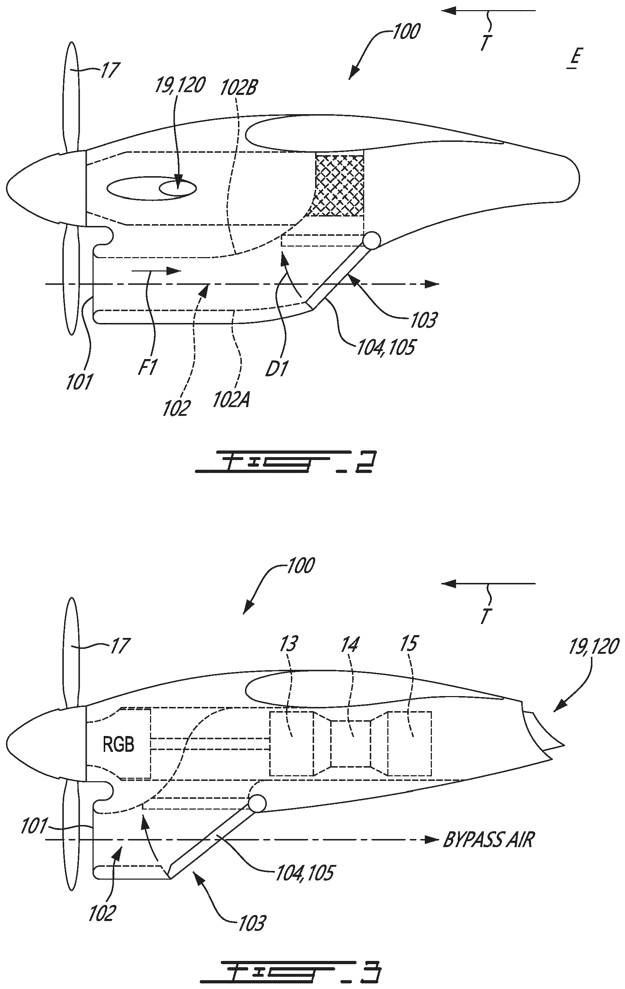

Referring to Fig. 2, the core of the gas turbine engine 10 is enclosed within a nacelle 100 that may at least partially alleviate the aforementioned drawbacks. The nacelle 100 defines an external envelope in contact with air of an environment E outside the nacelle 100. The nacelle therefore extends around the core and has a nacelle intake, referred to below simply as intake 101, for feeding air from the environment E to the compressor 13. The nacelle 100 has an intake conduit 102 extending from the intake 101 to the compressor 13 of the core. The intake 101 faces forward relative to the direction of travel T to scoop the air from the environment E and direct it in the intake conduit 102 that leads to the core of the gas turbine engine 10. The nacelle 100 further has a nacelle exhaust 120 for outputting combustion gases exiting the exhaust 19 of the gas turbine engine 10.

In some embodiments, a bypass outlet 103 is defined through a wall of the intake conduit 102. The bypass outlet 103 is in fluid communication with the environment E outside the nacelle 100 to discharge the air admitted through the intake 101 back into the environment E. As illustrated, the bypass outlet 103 may be substantially aligned with the intake 101 such that minimum deviations of the flow are required for air to flow from the intake 101 to the bypass outlet 103 to minimize drag.

In some embodiments, a blocking member 104, which may also be referred to as a blocking mechanism, is provided inside the intake conduit 102, downstream of the intake 101 and upstream of the core relative to a flow of air F1 in the intake conduit 102. The blocking member 104 is used to selectively fluidly isolate the core or permit the flow F1 of air to reach the core. At the same time, the blocking member 104 is used to selectively open or block the bypass outlet 103. More specifically, the blocking member 104 is movable between an open position shown in solid lines in Fig. 2 and a closed position shown in dashed lines in Fig. 2. In the open position, the core is fluidly connected to the environment E via both of the intake 101 and the nacelle exhaust 120 of the nacelle 100. In the closed position, the blocking member 104 hinders fluid communication between the core and the environment E via one of the intake 101 of the nacelle exhaust 120. The blocking member 104 is structured to block airflow from the intake to the compressor when in the closed position. At the same time, the blocking member 104, in the open position, extends across the bypass outlet 103 to prevent air from leaving the intake conduit 102 via the bypass outlet 103. In the closed position, the blocking member 104 is offset from the bypass outlet 103 to permit the flow of air F1 to flow out of the intake conduit 102 into the environment E while bypassing the core of the gas turbine engine 10. The blocking member 104 may alternatively be located downstream of the turbine 15. In the closed position, the blocking member 104 extends across a flow path extending from the intake 101 to the nacelle exhaust 120 of the aircraft engine. Stated differently, the blocking member 104 is movable between an open position in which the nacelle exhaust 120 is fluidly connected to the intake 101 through the core, and a closed position in which the blocking member 104 hinders fluid communication between the core and the environment E via one of the intake 101 and the nacelle exhaust 120. In the context of the present invention, the expression "hinders" means that the blocking member 104 exerts a substantial resistance to the flow. However, some air may still flow through the core. This quantity of air is sufficiently small to not cause windmilling of the core. However, in some configurations, the blocking member 104 is dimensioned to block substantially all airflow through the one of the intake conduit and an exhaust conduit when the blocking member 104 is in the closed position and the aircraft propulsor is moving at a cruise airspeed relative to earth. The exhaust conduit fluidly connects the turbine to the nacelle exhaust 120 of the nacelle.

Still referring to Fig. 2, the blocking member 104 may be a door 105, also referred to as a flap, pivotably mounted to a wall 102A of the intake conduit 102. The door 105 may be movable in other ways (e.g., sliding motion). The door 105 may pivot relative to the wall 102A along a direction depicted by arrow D1. In the open position, the door 105 is positioned to permit fluid communication between the intake 101 and the compressor 13. In the open position, the door 105 may lay substantially parallel to the wall 102A and is offset from a flow passage defined by the intake conduit 102 and extending from the intake 101 to the compressor 13. In the present invention, the expression "substantially" is meant to encompass slight deviations caused by, for instance, manufacturing tolerances. In the closed position, the door 105 extends across the intake conduit 102 and may abut a second wall 102B being opposite the wall 102A. In the open position, the door 105 extends across the bypass outlet 103 to hinder fluid communication through the bypass outlet 103. In the closed position, the door 105 is offset from the bypass outlet 103 to allow the air to flow through the bypass outlet 103.

Referring to Fig. 3, the nacelle 100 described above with reference to Fig. 2 may be used to enclose a gas turbine engine being a through-flow engine. As illustrated, the core, which includes the compressor 13, the combustor 14, and the turbine 15 are disposed one after the other in serial flow communication such that a flow through the core is in a direction opposite the direction of travel T. The operation of the blocking member 104 is as explained above with reference to Fig. 2 and is not repeated herein for conciseness.

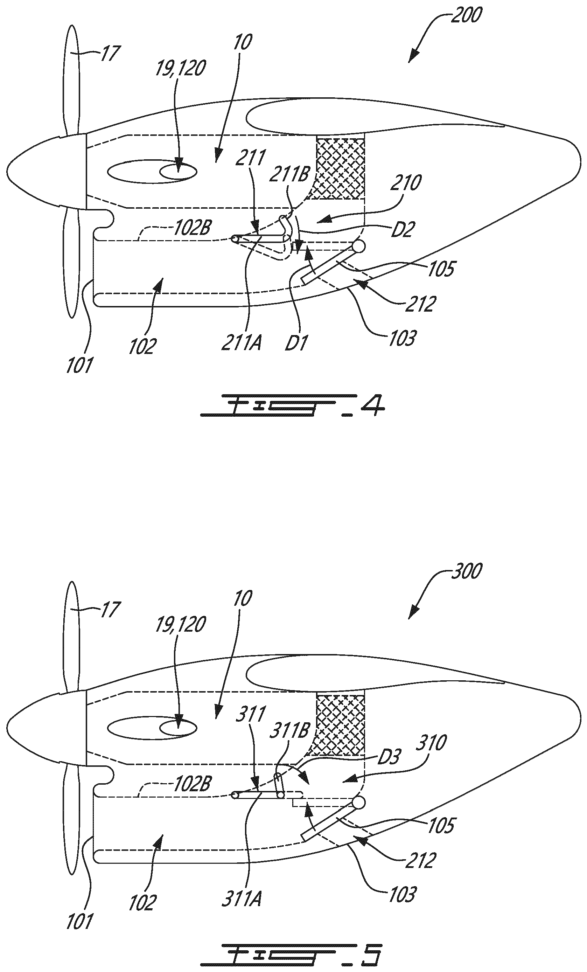

Referring now to Fig. 4, the gas turbine engine 10 may be enclosed by a nacelle 200 of another embodiment. In some embodiments, the nacelle 200 includes an inertial particle separator, referred to as IPS 210 below, configured for preventing at least a portion of particles from reaching the compressor 13 of the core. The IPS includes a deflector 211 pivotably mounted to the second wall 102B. The deflector 211 has a base section 211A pivotably mounted to the second wall 102B and a tip section 211B extending transversally to an end of the base section 211A. The deflector 211 is movable along a direction depicted by arrow D2 between a first position shown in solid lines and a second position shown in dashed lines. The deflector 211 is in the second position when particles are in the air and when it is desired to prevent these particles from being ingested by the compressor 13 and is in the first position when there is limited risk of particle ingestion. The IPS 210 includes a bypass conduit 212 defining the bypass outlet 103. The bypass conduit 212 stems from the intake conduit 102. The bypass conduit 212 fluidly connects the intake conduit 102 to the environment E while bypassing the core of the gas turbine engine 10.

As depicted in Fig. 4, the door 105, in the open position, overlaps an inlet of the bypass conduit 212 to prevent fluid communication between the intake conduit 102 and the bypass conduit 212. In the closed position, the door 105 is offset from the inlet of the bypass conduit 212 and abuts the deflector 211. Therefore, the deflector 211 and the door 105 are operable to conjointly hinder fluid communication between the intake 101 and the compressor 13. In some embodiments, the door 105 may be longer such as to block the inlet of the compressor 13 by itself, that is, without cooperation with the deflector 211.

Referring to Fig. 5, the gas turbine engine 10 may be enclosed by a nacelle 300 of another embodiment. The nacelle 300 of Fig. 5 essentially differs from the nacelle 200 by its IPS 310. The IPS 310 includes a deflector 311 that has a base section 311A pivotably mounted to the second wall 102B of the intake conduit 102 and a tip section 311B pivotably mounted to a distal end of the base section 311A. The tip section 311B is pivotable relative to the base section 311A between a first position shown in solid lines and a second position shown in dashed lines and along a direction depicted by arrow D3. The tip section 311B extends transversally to the base section 311A in the first position and is substantially parallel to the base section 311A in the second position. The base section 311A is also pivotable relative to the second wall 102B as explained above with reference to Fig. 4.

When it is required to move the door 105 from the open position in which the door 105 blocks the inlet of the bypass conduit 212 and the closed position in which the door 105 opens the bypass conduit 212, the tip section 311B of the deflector 311 is pivoted from the first position to the second position such that the tip section 311B abuts the door 105. Hence, the door 105 and the deflector 311 conjointly extend across the intake conduit 102 and block fluid communication from the intake 101 to the core of the gas turbine engine 10.

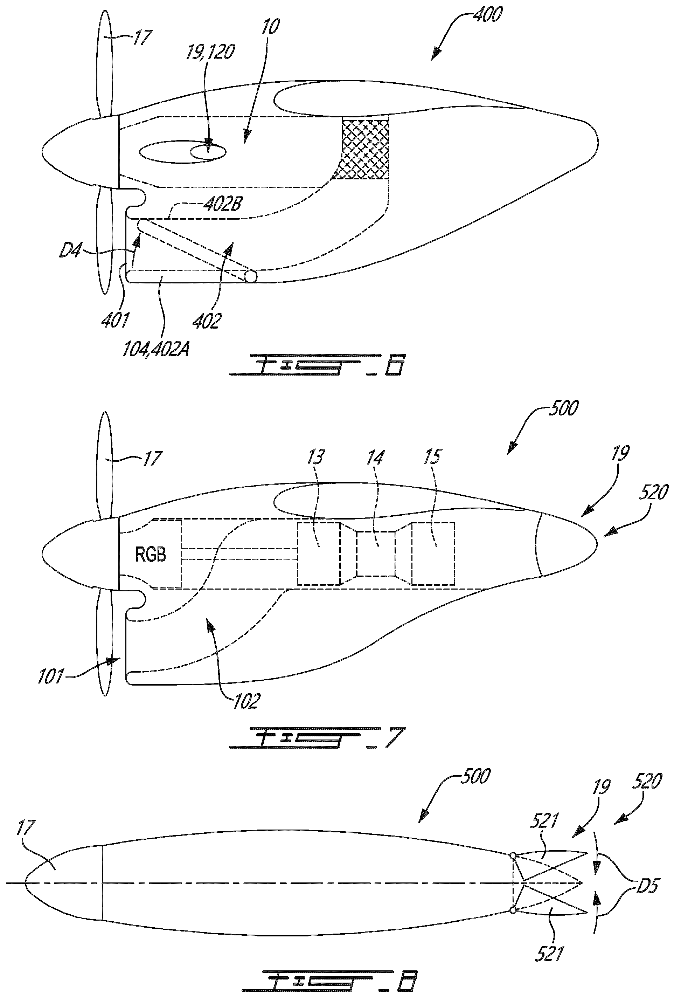

Referring now to Fig. 6, the gas turbine engine 10 may be enclosed by a nacelle 400 of another embodiment. In some embodiments, the nacelle 400 defines an intake 401 and includes an intake conduit 402 that extends from the intake 401 to the core of the gas turbine engine 10. The intake conduit 402 is configured to close access to the intake 401. More specifically, the intake conduit 402 includes opposed walls, namely, first and second walls 402A, 402B being spaced apart from one another. In this configuration, the blocking member 104 corresponds to the first wall 402A that extends from a base to a tip. The tip is located at the intake 401. The base of the first wall 402A is pivotably mounted to a remainder of the nacelle 400. The first wall 402A is movable between a first position shown in solid lines and corresponding to the open position of the blocking member 104 to a second position shown in dashed lines and corresponding to the closed position of the blocking member. The first wall 402A is pivotable from the open position to the closed position along a direction denoted by arrow D4 in Fig. 6.

In the closed position, the tip end of the first wall 402A abuts the second wall 402B thereby reducing a flow circulating area of the intake 401 to substantially zero. In other words, the first wall 402A and the second wall 402B move towards one another to conjointly block access to the intake conduit 402. Such a configuration may minimize drag since air may flow around the first wall 402A in a streamlined fashion.

Referring to Figs. 7-8, a gas turbine engine may be enclosed by a nacelle 500 of another embodiment. The nacelle 500 defines a nacelle exhaust 520 at a rear end thereof. The nacelle exhaust 520 is in fluid communication with the exhaust 19 of the gas turbine engine, which may be of the through-flow type. In some embodiments, the nacelle exhaust 520 includes two doors 521 that act as the blocking member. The two doors 521 may be shaped as clam shells and are pivotably mounted to a remainder of the nacelle 500. The two doors 521 are movable along a direction depicted by arrow D5, which may be transverse to a central axis of the gas turbine engine, between a first positions depicted in dashed lines to a second position depicted in solid lines. In the open position, the two doors 521 are in the second position thereby opening the nacelle exhaust 520. This permits fluid communication from the intake 101 to the environment E through the core and via the nacelle exhaust 520. In the closed position, the two doors 521 are in the first position and extend across the exhaust 19 to close the nacelle exhaust 520 to fluidly prevent air received into the intake 101 from flowing out of the nacelle 500 via the nacelle exhaust 520. Thus, the core and the intake conduit 102 act as a dead cavity and no air may induce windmilling of the core. Hence, in this configuration, the doors extends across the exhaust 19 in the closed position. The core is thus fluidly connected to the environment E solely via the intake 101 in the closed position of the doors. Although two doors are used, only one or more than two doors may be used in some configurations. Although a clam shell arrangement is depicted here, other types of doors, such as petals, irises, and so on may be used. This configuration may be used for a reverse-flow engine as depicted in Fig. 1.

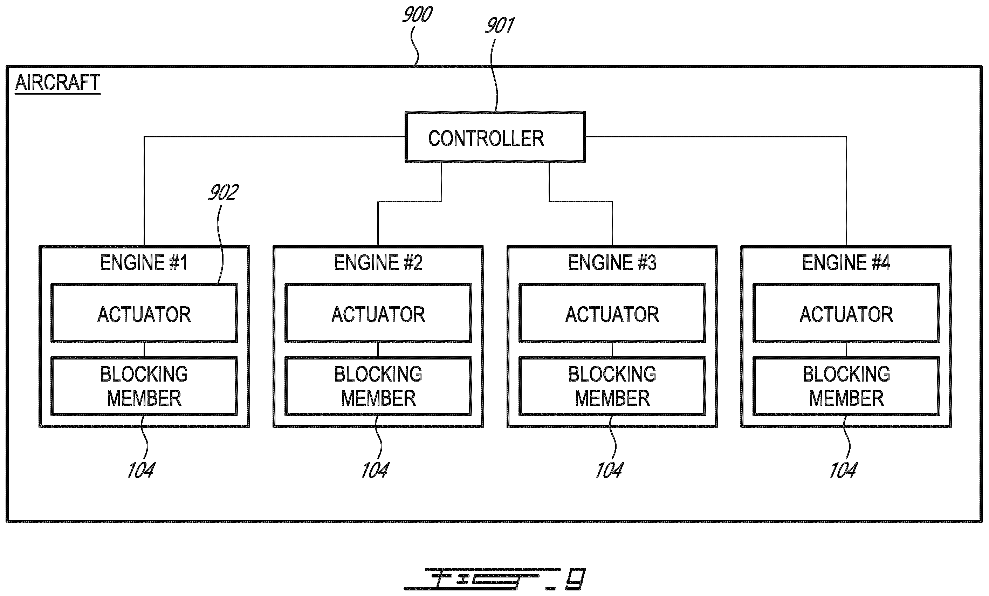

Referring now to Fig. 9, an aircraft is shown at 900. The aircraft is a four-engine aircraft and each of the four engines is drivingly engaged to a propeller such as the propeller 17 shown in Fig. 1. The aircraft 900 includes a controller 901 that communicates with each of the four engines. The controller 901 may be operatively connected to individual controllers of the four engines. The blocking members 104 of each of the engines may be drivingly engaged by a respective actuator 902. The actuators 902 may be any suitable actuator such as a linear actuator, a pneumatic actuator, a solenoid, a hydraulic actuator, and so on. The controller 901 may be configured to cause a subset of the engines to power off while the aircraft 900 is flying. The subset may be, for instance, a single engine, or two engines disposed on opposite sides of a fuselage of the aircraft 900. The controller 901 is further configured to power the corresponding actuator(s) 902 to move the blocking member(s) from the open position to the closed position to prevent air from flowing through the cores of the powered off engines. The controller 901 is also configured to power the actuator(s) 902 to move the blocking member(s) from the closed position to the open position for re-starting the powered off engines.

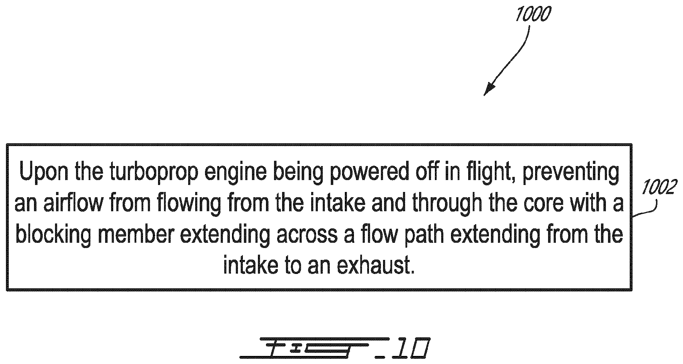

Referring to Fig. 10, a method of mitigating effects of windmilling in a turboprop engine is shown at 1000. The method 1000 includes, upon the turboprop engine being powered off in flight, preventing an airflow from flowing from the intake 101 and through the core with a blocking member 104 extending across a flow path extending from the intake 101 to the exhaust 19 at 1002.

In some embodiments, the blocking member 104 is located upstream of the compressor 13 and within the intake conduit 102 defining the intake 101. In some other embodiments, the blocking member 104 is located at the exhaust 19.

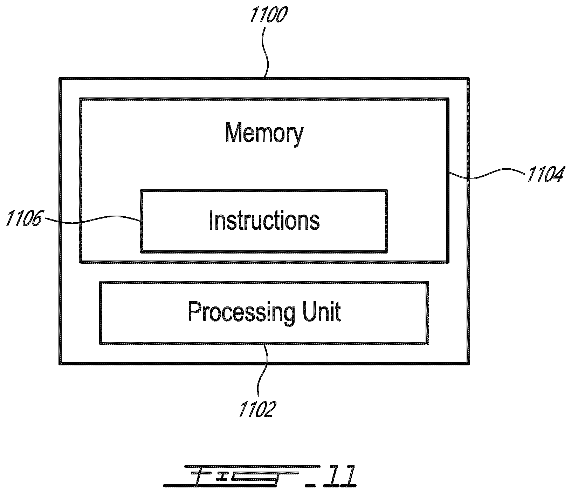

With reference to Fig. 11, an example of a computing device 1100 is illustrated. For simplicity only one computing device 1100 is shown but the system may include more computing devices 1100 operable to exchange data. The computing devices 1100 may be the same or different types of devices. The controller 901 may be implemented with one or more computing devices 1100. Note that the controller 901 can be implemented as part of a full-authority digital engine controls (FADEC) or other similar device, including electronic engine control (EEC), engine control unit (ECU), electronic propeller control, propeller control unit, and the like. In some embodiments, the controller 901 is implemented as a Flight Data Acquisition Storage and Transmission system, such as a FAST^{™} system. The controller 901 may be implemented in part in the FAST^{™} system and in part in the EEC. Other embodiments may also apply.

The computing device 1100 comprises a processing unit 1102 and a memory 1104 which has stored therein computer-executable instructions 1106. The processing unit 1102 may comprise any suitable devices configured to implement the method described herein such that instructions 1106, when executed by the computing device 1100 or other programmable apparatus, may cause the functions/acts/steps performed as part of the method described herein as described herein to be executed. The processing unit 1102 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 1104 may comprise any suitable known or other machine-readable storage medium. The memory 1104 may comprise non-transitory computer readable storage medium, for example, but not limited to, an electronic, magnetic, optical, electromagnetic, infrared, or semiconductor system, apparatus, or device, or any suitable combination of the foregoing. The memory 1104 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 1104 may comprise any storage means (e.g., devices) suitable for retrievably storing machine-readable instructions 1106 executable by processing unit 1102.

The methods and systems described herein may be implemented in a high level procedural or object oriented programming or scripting language, or a combination thereof, to communicate with or assist in the operation of a computer system, for example the computing device 1100. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 1102 of the computing device 1100, to operate in a specific and predefined manner to perform the functions described herein, for example those described in the method described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present invention are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present invention is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present invention have been disclosed, it will be apparent to those of ordinary skill in the art that many more embodiments and implementations are possible within the scope of the present invention. For example, the present invention as described herein includes several aspects and embodiments that include particular features. Although these particular features may be described individually, it is within the scope of the present invention that some or all of these features may be combined with any one of the aspects and remain within the scope of the present invention. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present invention, a person of ordinary skill in the art will recognize that changes may be made to the embodiments described herein without departing from the scope of the present technology. Yet further modifications could be implemented by a person of ordinary skill in the art in view of the present invention, which modifications would be within the scope of the present technology.

## Claims

1. An aircraft engine (10), comprising:
a core having a compressor (13), a combustor (14), and a turbine (15) disposed in serial flow communication, the turbine (15) in driving engagement with a propeller (17);
a nacelle (100; 200; 300; 400; 500) extending around the core, the nacelle (100; 200; 300; 400; 500) having a nacelle intake (101; 401) upstream of the core and a nacelle exhaust (120; 520) downstream of the core, the nacelle intake (101; 401) configured for receiving air from an environment outside the nacelle (100; 200; 300; 400; 500), the nacelle intake (101; 401) fluidly connected to the compressor (13) for feeding air thereto, the nacelle exhaust (120; 520) configured to discharge combustion gases from the turbine (15) into the environment outside the nacelle (100; 200; 300; 400; 500); and
a blocking member (104; 521) movable between an open position in which the core is fluidly connected to the environment via both the nacelle intake (101; 401) and the nacelle exhaust (120; 520), and a closed position in which the blocking member (104; 521) hinders fluid communication between the core and the environment via one of the nacelle intake (101; 401) and the nacelle exhaust (120; 520).

2. The aircraft engine (10) of claim 1, wherein the nacelle (100; 200; 300; 400) has an intake conduit (102; 402) extending from the nacelle intake (101; 401) towards the compressor (13), the blocking member (104) is located between the nacelle intake (101; 401) and the compressor (13), and the blocking member (104) is structured to block airflow from the nacelle intake (101; 401) to the compressor (13) when in the closed position.

3. The aircraft engine (10) of claim 2, wherein the blocking member (104) is a door (105) pivotably mounted to a wall (102A) of the intake conduit (102), the door (105) extending across the intake conduit (102) in the closed position and being positioned to permit fluid communication between the nacelle intake (101) and the compressor (13) in the open position.

4. The aircraft engine (10) of claim 3, comprising an inertial particle separator including a deflector (211; 311) pivotably mounted to a second wall (102B) of the intake conduit (102) opposite the wall (102A), the door (105) abutting the deflector (211; 311) in the closed position of the blocking member (104), the deflector (211; 311) and the door (105) conjointly hindering fluid communication between the nacelle intake (101) and the compressor (13).

5. The aircraft engine (10) of claim 4, wherein the deflector (211; 311) includes a base section (211A; 311A) pivotably connected to the second wall (102B) and a tip section (211B; 311B) pivotably mounted to the base section (211A; 311A), the tip section (211B; 311B) movable relative to the base section (211A; 311A) between a first position in which the tip section (211B; 311B) extends transversally to the base section (211A; 311A) and a second position in which the tip section (211B; 311B) is substantially parallel to the base section (211A; 311A), the tip section (211B; 311B) being in the second position in the closed position of the blocking member (104), the door (105) abutting the tip section (211B; 311B) in the closed position.

6. The aircraft engine (10) of any of claims 2 to 5, wherein the intake conduit (102) defines a bypass outlet (103), the door (105) extending across the bypass outlet (103) in the open position and being offset from the bypass outlet (103) in the closed position.

7. The aircraft engine (10) of claim 2, wherein the blocking member (104) is a wall (402A) of the intake conduit (102; 402), the wall (402A) extending from a base to a tip, the tip located at the nacelle intake (401), the base pivotably connected to a remainder of the nacelle (400), the wall (402A) movable from the open position to the closed position to close the nacelle intake (401) of the intake conduit (402).

8. The aircraft engine (10) of claim 1, wherein the blocking member (104) is a door (521) located at the nacelle exhaust (520) of the nacelle (500), the door (521) extending across the nacelle exhaust (520) in the closed position, the core fluidly connected to the environment solely via the nacelle intake (101) in the closed position of the door (521).

9. An aircraft (900) comprising a plurality of aircraft engines (10), the plurality of aircraft engines (10) including one or more of the aircraft engine (10) of any preceding claim, the aircraft engine (10) having a controller (901) operatively connected to an actuator (902), the actuator (902) engaged to the blocking member (104), the controller (901) having a processing unit (1102) and a computer-readable medium (1104) having instructions (1106) stored thereon executable by the processing unit (1102) to:
cause the aircraft engine (10) to power off while the aircraft (900) is flying; and
power the actuator (902) to move the blocking member (104) from the open position to the closed position.

10. A method for mitigating effects of windmilling in a turboprop engine (10) having a nacelle (100; 200; 300; 400; 500) enclosing a core including a compressor (13), a combustor (14), and a turbine (15), the nacelle (100; 200; 300; 400; 500) defining an intake (101; 401) fluidly connected to the core, the method comprising:
upon the turboprop engine (10) being powered off in flight, preventing an airflow from flowing from the intake (101; 401) and through the core with a blocking member (104) extending across a flow path extending from the intake (101; 401) to an exhaust (120; 520).

11. The method of claim 10, wherein the blocking member (104) is located upstream of the compressor (13) and within an intake conduit (102; 402) defining the intake (101; 401).

12. The method of claim 10, wherein the blocking member (104) is located at the exhaust (520).
